Europäisches Patentamt

European Patent Office

Office européen des brevets

(19)

(11) Veröffentlichungsnummer: **0 002 471**

**B1**

(12) **EUROPÄISCHE PATENTSCHRIFT**

(21) Anmeldenummer: **78101515.1**

(22) Anmeldetag: **01.12.78**

(51) Int. Cl.³: **B 23 K 15/00,**
**B 21 D 47/00**

(54) Verfahren zur Herstellung eines wabenartigen Blechgebildes durch Korpuskularschweissen

(30) Priorität: **08.12.77 DE 2754776**

(43) Veröffentlichungstag der Anmeldung:
**27.06.79 Patentblatt 79/13**

(45) Bekanntmachung des Hinweises auf die Patenterteilung:
**07.01.81 Patentblatt 81/01**

(84) Benannte Vertragsstaaten:
**DE FR GB SE**

(56) Entgegenhaltungen:
**DE - A - 1 565 102**
**DE - B - 1 192 624**
**GB - A - 916 302**
**LU - A - 65 315**
**US - A - 2 987 610**
**US - A - 3 566 071**

**WELDING JOURNAL, Vol. 51, January 1972,
Miami, D. G. SCOTT "Successful joining of
beryllium", Seiten 15—23**

**WELDING AND METAL FABRICATION, Vol. 40,
January 1972, Haywards Heath. Sussex, D. B.
PEARSON "Numerically controlled welding",
Seiten 15—20**

**RADIO MENTOR ELECTRONIC, Vol. 38, Oktober
1972 München, DE, K. H. GROBE "Schweizen
unter dem Mikroskop", Seiten 483—485**

(73) Patentinhaber: **Steigerwald Strahltechnik GmbH
Haderunstrasse 1a
D - 8000 München 70 (DE)**

(72) Erfinder: **Schubert, Gernot, Dipl.-Ing.
Theodor-Fischer-Strasse 120
D - 8000 München 50 (DE)**

(74) Vertreter: **von Bezold, Dieter, Dr. et al
Postfach 86 02 60
D - 8000 München 86 (DE)**

Verfahren zur Herstellung eines wabenartigen Blechgebildes durch Korpuskularstrahlschweissen

Die vorliegende Erfindung betrifft ein verfahren gemäss dem Oberbegriff des Patentanspruchs 1.

Wabenartige Blechgebilde der oben genannten Art können aus sich abwechselnden ebenen und gewellten Blechen oder spiralförmig aufgewickelten Windungen solcher Bleche bestehen. Es sind ferner gröbere Wabenstrukturen bekannt, die aus gewellten Blechen bestehen, welche von Wellblech zu Wellblech um eine halbe Periode gegeneinander versetzt sind und sich an den Scheitelbereichen der Wellen berühren.

Ein Problem bei der Herstellung solcher wabenartiger Blechgebilde besteht darin, die einzelnen Bleche oder Blechwindungen so miteinander zur verbinden oder in bezug aufeinander zu fixieren, daß das betreffende Gebilde den erforderlichen strukturellen Zusammenhalt und die geforderte mechanische Stabilität hat. Bei spiralförmig gewickelten Wabenstrukturen der oben erwähnten Art ist es. bekannt, die Fixierung durch ein den Wickel quer durchsetzendes, nietartiges Befestigungselement zu erreichen. Hierdurch wird die Wickelstruktur jedoch erheblich gestört, ihre Durchlässigkeit für Gase und dgl. verringert und das Aussehen beeinträchtigt.

Es ist ferner aus der DE—PS 1 192 624 bekannt, die für einen solchen Wickel bestimmtenBleche mit einer Lotpaste zu überziehen und nach Bildung des Wickels durch Erhitzen zu verlöten. Dies ist relativ kompliziert und aufwendig, außerdem besteht die Gefahr, daß sich der Wickel bei der Erhitzung verzieht.

Aus der US—PS 2 987 610 ist ein Verfahren zum Herstellen von Sandwich-Bauteilen mittels eines Ladungsträgerstrahles bekannt, bei dem zwei ebene Gurtbleche mit einem zwischen den Gurtblechen befindlichen gewellten Blech an den Berührungslinien durch die Gurtbleche hindurch mit dem Korpuskularstrahl verschweißt werden. Der Korpuskularstrahl verläuft also senkrecht zur Längsrichtung der Löcher zwischen den Gurtblechen und dem gewellten Blech, und er wird lediglich und genau auf die Berührungslinien zwischen den Scheiteln des gewellten Bleches und den Gurtblechen gerichtet. Dieses Verfahren erfordert eine genaue Positionierung des Werstücks bezüglich des Elektronenstrahls und eignet sich außerdem nicht für mehrlagige wabenartige Blechgebilde.

Aus der Zeitschrift "Welding Journal", Band 51, Januar 1972, Seiten 15—21 ist es bekannt, wabenartige Blechgebilde durch schrittweises Punktschweißen herzustellen und zu reparieren.

Aus der Zeitschrift "Welding and Metal Fabrication", Band 40, Januar 1972, Seiten 15—20 ist es bekannt, an elektronischen Mikroschaltkreisen Anschlußdrähte durch programmgesteuertes Elektronenstrahlschweißen anzubringen. Dieses Verfahren ließe sich auf das Verschweißen der stirnseitigen Berührungsstellenbereiche von wabenartigen Blechgebilden nicht anwenden, da solche Blechgebilde im allgemeinen nicht regelmäßig genug sind um eine Programmsteuerung anwenden zu können.

Der vorliegenden Erfindung liegt dementsprechend die Aufgabe zugrunde, ein Verfahren zum Herstellen eines wabenartigen Blechgebildes anzugeben, welches einfach, kostensparend und schnell durchgeführt werden kann.

Diese Aufgabe wird durch ein Verfahren gemäß dem Oberbegriff des Patentanspruchs 1 gelöst, das erfindungsgemäß durch die im kennzeichnenden Teil des Patentanspruchs 1 angegebenen Merkmale gekennzeichnet ist.

Weiterbildungen und vorteilhafte Ausgestaltungen des erfindungsgemäßen Verfahrens sind Gegenstand von Unteransprüchen.

Bei dem Verfahren gemäß der Erfindung wird das Blech des wabenartigen Blechgebildes an den Stirnflächen nicht durch gezielte Schweißungen verbunden sondern einfach dadurch, daß die Stirnfläche "ungezielt" mit dem parallel zu den Löchern des wabenartigen Blechgebildes verlaufenden Korpuskularstrahl überstrichen wird. Beim Überstreichen der Stirnfläche mit einem derart orientierten Korpuskularstrahl tritt an den Berührungsbereichen ein Wärmestau auf, der zu der gewünschten Verschweißung führt, die freiliegenden Teile des Bleches werden dagegen wegen der besseren Wärmeabgabemöglichkeit nicht wesentlich beeinträchtigt.

Da es nicht erforderlich ist, den Korpuskularstrahl gezielt auf die verschiedenen Berührungsbereiche zu richten, entfällt eine Programmierung oder exakte Positionierung des Werkstücks und das Verfahren kann schnell, einfach und ohne große Kosten durchgeführt werden.

Die Verbindung der Bleche an den Stirnflächen gewährleistet einen festen Zusammenhang des Blechgebildes und eine hohe strukturelle Stabilität. Ein nennenswertes Verziehen oder Verformen des Blechgebildes tritt beim Verschweißen nicht ein. Die offene Struktur des Blechgebildes bleibt voll erhalten.

Im folgenden werden Ausführungsbeispiele der Erfindung unter Bezugnahme auf die Zeichnungen näher erläutert.

Es zeigen:

Fig. 1 eine Stirnansicht eines wabenartigen Gebildes bei der Herstellung von örtlichen Verschweißungen gemäß einer Ausführungsform des erfindungsgemäßen Verfahrens;

Fig. 2 eine zum Teil im Schnittaufbruch dargestellte Seitenansicht des Gebildes gemäß Fig. 1;

Fig. 3 eine vergrößerte Ansicht eines Teiles des Gebildes gemäß Fig. 1 und

Fig. 4 eine vergrößerte Schnittansicht eines Teiles der Fig. 2, gesehen in einer Ebene IV—IV der Fig. 3.

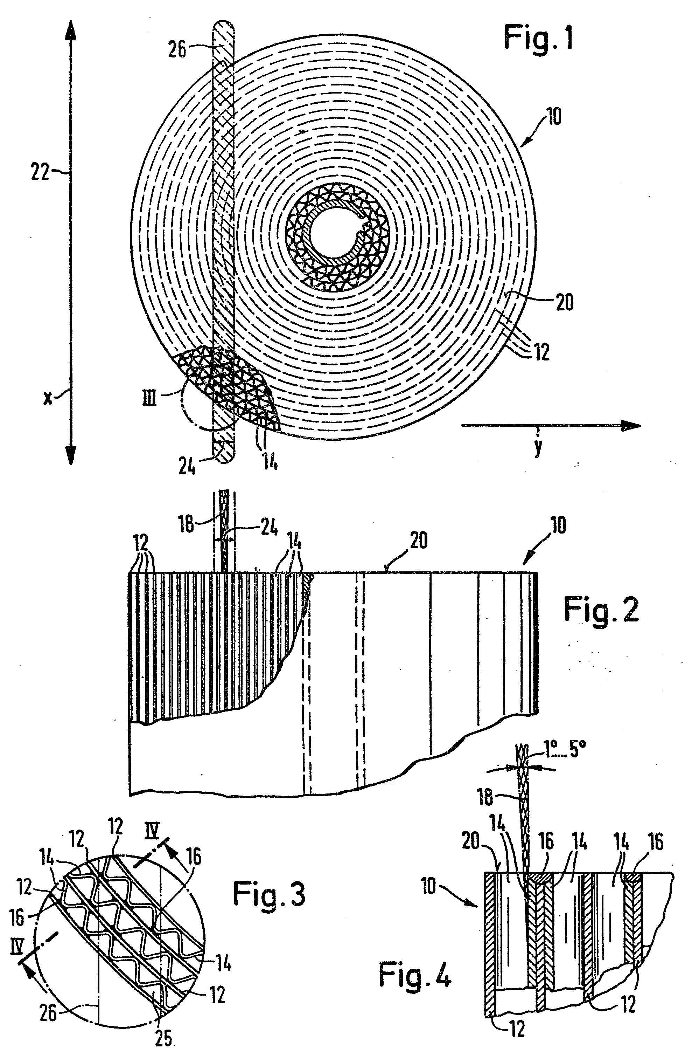

Bei dem wabenartigen Gebilde 10, das in Fig. 1 in Stirnansicht dargestellt ist, handelt es sich um einen Wickel in Form eines geraden Kreiszylinders, der aus spiralförmigen, aneinander anliegenden Windungen eines glatten Blechstreifens 12 und eines gewellten Blechstreifens 14 besteht. Die Blechstreifen berühren sich an den Scheitelpunkten der Wellungen des gewellten Blechstreifens 14 und sind erfindungsgemäß, wie in Fig. 3 und 4 genauer dargestellt ist, an vorzugsweise beiden Stirnflächen an diesen örtlich getrennten Berührungsbereichen 16 durch örtliche Schweißstellen miteinander verbunden. Das wabenartige Gebilde 10 hat durch die Verbindung der vielen Berührungsbereiche an den Stirnflächen eine ausgezeichnete strukturelle Stabilität, andererseits werden sein Aussehen und seine Durchlässigkeit durch die örtlich eng begrenzten Schweißstellen nicht beeinträchtigt.

Die vielen Schweißstellen an den örtlich getrennten Berührungsbereichen 16 werden gemäß einem weiteren wesentlichen Merkmal der vorliegenden Erfindung mittels eines Korpuskularstrahles, z.B. eines Ionenstrahles, vorzugsweise jedoch eines Elektronenstrahles, hergestellt, der so auf die Stirnfläche 20 der Wabenstruktur gerichtet wird, daß er im wesentlichen parallel zu den einander entgegengesetzten großen Hauptflächen der Blechstreifen verläuft. Elektronenstrahlschweißmaschinen sind allgemein bekannt, siehe z.B. auch die US—PS 2 987 610.

Bei der Herstellung der Schweißstellen an den örtlich getrennten Berührungsbereichen 16 kann der Korpuskularstrahl in einer ersten Richtung x (Fig. 1) periodisch quer über die Stirnfläche 20 abgelenkt werden, während gleichzeitig das Werkstück, also das wabenartige Gebilde, in einer zweiten Richtung y durch eine mechanische Vorschubeinrichtung quer zu der vom Korpuskularstrahl in x-Richtung periodisch überstrichenen Linie 22 bewegt wird. An die Stelle des Vorschubes in y-Richtung kann auch eine entsprechende langsame Strahlablenkung in dieser Richtung treten. Die Ablenkung in der x-Richtung kann mit einer verhältnismäßig niedrigen Frequenz, z.B. 10 bis 50 Hz, insbesondere 30 Hz, erfolgen. Ferner kann der periodischen Ablenkung in x-Richtung noch eine kleine, höherfrequente Ablenkung 24 (Fig. 2) in y-Richtung überlagert werden, deren Frequenz z.B. einige hundert oder tausend Hertz, insbesondere z.B. 4 kHz betragen kann. Die Ablenkamplitude in x-Richtung hängt vom Werkstückdurchmesser ab und kann z.B. 90 mm betragen. Die höherfrequente Ablenkung 24 in y-Richtung kann z.B. eine Amplitude von 2 mm haben. Anstelle der x-Ablenkung kann auch z.B. ein linienförmig fokussierter Strahl verwendet werden. Der Strahl verläuft also im wesentlichen parallel zur Längsrichtung von unter sich parallelen Löchern 25 des wabenartigen Gebildes.

Für das Verschweißen der Berührungsbereiche 16 wird vorzugsweise ein eng gebündelter Elektronenstrahl 18 verwendet, z.B. ein Strahl mit einer Apertur von einigen Winkelgraden. Der Fokus liegt vorzugsweise in oder in der Nähe der Stirnfläche 20.

Beim Verschweißen eines wabenartigen Wickels der in Fig. 1 dargestellen Art aus etwa bis 100 Mikrometer dickem Stahlblech kann z.B. mit den oben angegebenen Ablenkfrequenzen und -amplituden, einem Arbeitsabstand zwischen Austrittsende der Strahlkanone und Stirnfläche 20 von etwa 440 mm, einem Elektronenstrahl mit einer Strahlspannung von 130 kV und einem Strahlstrom von etwa 22 mA oder auch mit einer Strahlspannung von 60 kV, einem Strahlstrom von 50mA und einem Arbeitsabstand von 300 bis 500 mm gearbeitet werden. Diese Werte sind derzeit bevorzugte Beispiele, sie können je nach Art des Werkstücks und der Arbeitsbedingungen jedoch auch anders gewählt werden. Die Vorschubgeschwindigkeit (y) kann z.B. ca 30 mm/sec. betragen.

Die Strahlenergie wird in Abhängigkeit von der Blechdicke, dem Fokussierungszustand und den Ablenkfrequenzen und -amplituden so gewählt, daß das Werkstückmaterial zwar an den örtlichen Berührungsbereichen 16 im Anschluß an die vom Strahl beaufschlagte Stirnfläche 20 schmilzt, nicht jedoch dort, wo der in die Zwischenräume oder Löcher zwischen den Blechen fallende Strahl das Blech streifend berührt. Beim streifenden Einfall verteilt sich die Energie des Strahls nämlich auf eine größere Fläche, so daß der Strahl dort auf die Stirnfläche des Bleches erheblich mehr Energie an das Blech abgeben und insbesondere in den Berührungsbereichen tritt dabei ein Wärmestau auf, der ein Schmelzen des Werkstückmaterials und die gewünschte Schweißverbindung an den Berührungsbereichen 16 bewirkt. Eine Einrichtung des Strahles auf die einzelnen Berührungsbereiche ist daher nicht erforderlich, sie wäre bei feinen Wabenstrukturen aus dünnen Blechen wegen der lagemäßigen Unbestimmtheit der Berührungsbereiche praktisch auch sehr schwierig. Bei dem Verfahren gemäß der Erfindung wird dagegen durch die Strahleinflußlinie 22 bzw. die durch die x/y-Ablenkung erzeugt Strahleinflußfläche 26 jeder zu verschweißende Berührungsbereich unabhängig von seiner genauen Lage erfaßt und verschweißt. In Abhängigkeit von der Matrixform des wabenartigen Gebildes, der Blechstärke und der Aufschmelztiefe können mit dem vorliegenden Verfahren einige tausend Schweißstellen in der Sekunde hergestellt werden. Die hohe Energiedichte des Energiestrahles wirkt sehr kurzfristig aber dennoch an allen Schweißstellen des Werkstückes gleichmäßig ein, unabhängig von der relativen Lage zwischen Werkstück und Strahlkanone. Der Wärmestau an den Berührungsbereichen, der sich während der an sich kurzen Verweilzeit des Strahls im Berührungsbereich einstellt, bewirkt, daß die Berührungsbereiche verschweißt werden, die geometrische Form der Matrix des wabenartigen Gebildes jedoch nicht beeinträchtigt wird. Das Schweißergebnis ist von Schweißstelle (Berührungsbereich) zu Schweißstelle homogen und sehr gut reproduzierbar. Da die Seitenflächen vom Strahl nur streifend getroffen werden, bleiben sie wegen der dadurch niedrigeren Energiedichte unbeschädigt.

Die Erfindung ist selbstverständlich nicht auf wabenartige Gebilde mit einer ebenen Stirnfläche beschränkt, sondern auch bei wabenartigen Gebilden mit gekrümmter, z.B. kugelkalottenförmiger Oberfläche anwendbar.

Das beschriebene Verfahren kann auch mit einem Ionenstrahl, also ganzallgemein mit einem Korpuskularstrahl, durchgeführt werden.

Wabenartige Blechgebilde der dargestellten und beschriebenen Art können insbesondere als Einsätze in Auspuffanlagen von Innenbrennkraftmaschinen, wie Automobilmotoren, verwendet werden. Da die Verschweißung ohne Fremdstoffe erfolgt, eignen sie sich auch sehr gut als Trägerstrukturen für Katalysatoren. Bei Verwendung in Auspuffanlagen können die vorliegenden Wabenstrukturen also insbesondere als Träger für Katalysatoren zur Verringerung des Schadstoffgehaltes der Abgase verwendet werden.

**Patentansprüche**

1. Verfahren zum Herstellen eines wabenartigen Gebildes aus Blech, dessen große Seitenflächen sich an einer Vielzahl von Stellen berühren und eine Vielzahl von in einer vorgegebenen Richtung verlaufenden Löchern bilden, bei welchem das Blech an den Berührungsstellen mittels eines Korpuskularstrahles verschweißt wird, dadurch gekennzeichnet, daß die Berührungsstellen an Bereichen (16), die an mindestens eine quer zu den Löchern (25) verlaufende Stirnfläche (20) angrenzen, dadurch verschweißt werden, daß die ganze Stirnfläche mit dem Korpuskularstrahl (18) überstrichen wird, der mit solcher Orientierung auf die Stirnfläche (20) gerichtet ist, daß er im wesentlichen in Längsrichtung der Löcher (25) verläuft.

2. Verfahren nach Anspruch 1, dadurch gekennzeichnet, daß der Korpuskularstrahl (18) in einer ersten Richtung (x) quer über die ganze Stirnfläche (20) abgelenkt wird, und daß in einer zweiten, die erste Richtung (x) schneidenden Richtung (y) eine Relativbewegung zwischen der Stirnfläche und dem Korpuskularstrahl erzeugt wird.

3. Verfahren nach Anspruch 2, dadurch gekennzeichnet, daß der Korpuskularstrahl außerdem periodisch mit einer zur Amplitude der ersten Ablenkung kleinen Amplitude quer zur Richtung (x) der ersten Ablenkung gewedelt wird.

4. Verfahren nach Anspruch 3, dadurch gekennzeichnet, daß die Frequenz der Wedelung mindestens eine Größenordnung größer ist als die Frequenz der Ablenkung des Korpuskularstrahls (18) in der ersten Richtung (x).

5. Verfahren nach Anspruch 1, dadurch gekennzeichnet, daß die Stirnfläche (20) mit einem bandförmigen Korpuskularstrahl überstrichen wird.

6. Verfahren nach einem der Ansprüche 1 bis 5, dadurch gekennzeichnet, daß die Energiedichte (18) des Korpuskularstrahls im Bereich der Stirnfläche (20) in Abhängigkeit von der Geschwindigkeit der Relativbewegung zwischen dem Korpuskularstrahl (18) und dem wabenartigen Gebilde (10) so gewählt wird, daß das Werkstückmaterial durch den Korpuskularstrahl an den Berührungsbereichen geschmolzen wird, nicht jedoch an den Seitenflächen des Bleches, auf die der Korpuskularstrahl streifend auffällt.

**Revendications**

1. Procédé de fabrication d'un objet en nid d'abeilles réalisé à partir d'une tôle dont les grandes faces latérales se touchent en plusieurs endroits et forment un grand nombre de trous s'étendant dans une direction prédéterminée, dans lequel la tôle est soudée aux points de contact au moyen d'un rayonnement corpusculaire, caractérisé en ce que les points de contact sont soudés dans des zones (16) qui aboutissent à au moins une face frontale (20) s'étendant perpendiculairement aux trous (25) de telle façon que la totalité de la surface frontale soit balayée par le rayonnement corpusculaire (18) qui est dirigé sur cette surface frontale (20) avec une orientation telle qu'il s'étende essentiellement dans la direction longitudinale des trous (25).

2. Procédé suivant la revendication 1, caractérisé en ce que le rayonnement corpusculaire (18) est dévié dans une première direction (x) sur la totalité de la surface frontale (20) à travers de celle-ci et en ce qu'un mouvement relatif entre la surface frontale et le rayonnement corpusculaire se produit dans une deuxième direction (y) recoupant la première direction (x).

3. Procédé suivant la revendication 2, caractérisé en ce que le rayonnement corpusculaire est en outre animé d'un mouvement d'oscillation périodique perpendiculairement à la direction (x) de la première déviation et avec une amplitude petite par rapport à celle de la première déviation.

4. Procédé suivant la revendication 3, caractérisé en ce que la fréquence de l'oscillation est plus grande d'au moins un ordre de grandeur que la fréquence de déviation du rayonnement corpusculaire (18) dans la première direction (x).

5. Procédé suivant la revendication 1, caractérisé en ce que la surface frontale (20) est balayée au moyen d'un rayonnement corpusculaire en forme de bande.

6. Procédé suivant l'une quelconque des revendications 1 à 5, caractérisé en ce que la densité énergétique (18) du rayonnement corpusculaire dans la zone de la surface frontale (20) est choisie en fonction de la vitesse du mouvement relatif entre le rayonnement corpusculaire (18) et l'objet en nid d'abeilles (10), de telle façon que le matériau de la pièce soit fondu par le rayonnement corpusculaire dans les zones de contact, sans toutefois être fondu aux faces latérales de la tôle sur lesquelles le rayonnement corpusculaire tombe en étant rasant.

## Claims

1. A method for the fabrication of a honeycomblike structure from sheet metal having large lateral surfaces which contact each other at a multiplicity of points and form a multiplicity of holes extending in a predetermined direction by welding said sheet metal at said contact points by a corpuscular beam, characterized in that the sheet metal is welded at limited contact point areas which abut a frontal surface extending transversely to the holes, by sweeping said corpuscular beam across said frontal surface (20), said corpuscular beam being directed with such orientation toward the frontal surface that it substantially extends essentially longitudinally of the holes.

2. The method as defined in claim 1, characterized by the fact that the corpuscular beam (18) is deflected in a first direction (x) transversely over the entire frontal surface (20) and that in a second direction (y), crossing said first direction (x), a relative movement is generated between the frontal surface and the corpuscular beam.

3. The method as defined in claim 2, characterized by the fact that the corpuscular beam is scanned periodically, with an amplitude that is low in relation to the amplitude of the first deflection, transversely to the direction of the first deflection.

4. The method as defined in claim 3, characterized by the fact that the scanning frequency is larger by at least one order of magnitude than the frequency of the deflection of the corpuscular beam (18) in the first direction (x).

5. The method as defined in claim 1 characterized by the fact that the frontal surface (20) is scanned with a sheetlike corpuscular beam.

6. The method as defined in any of claims 1 to 5, characterized by the fact that the density of energy of the corpuscular beam (18) in the area of the frontal surface is selected, as a function of the velocity of the relative movement between the corpuscular beam (18) and the honeycomblike structure (10) in such a manner that the sheet material is molten by the corpuscular beam at the contact areas immediately adjacent the frontal surface, but is not molten along the lateral surfaces of the panels, where the corpuscular beam impinges in a grazing manner.

0 002 471

Fig. 1

Fig. 2

Fig. 3

Fig. 4

1° ... 5°